# EUROPÄISCHE PATENTSCHRIFT

(11) **EP 3 758 562 B1**
(45) Veröffentlichungstag und Bekanntmachung des Hinweises auf die Patenterteilung: **08.04.2026**
(21) Anmeldenummer: 19712022.3
(22) Anmeldetag: 18.02.2019
(51) Int. Cl.: A47J 27/00

(54) **GARSYSTEM**
COOKING SYSTEM
SYSTÈME DE CUISSON

(30) Priorität: 02.03.2018 ES 201830204
(43) Veröffentlichungstag der Anmeldung: 06.01.2021
(73) Patentinhaber: BSH Hausgeräte GmbH, 81739 München (DE)
(72) Erfinder: ACERO ACERO, Jesus, 50002 Zaragoza (ES); ANTON FALCON, Daniel, 50010 Zaragoza (ES); CARRETERO CHAMARRO, Claudio, 50003 Zaragoza (ES); HERNANDEZ BLASCO, Pablo Jesus, 50019 Zaragoza (ES); LLORENTE GIL, Sergio, 50009 Zaragoza (ES); LOPE MORATILLA, Ignacio, 50010 Zaragoza (ES); PLUMED VELILLA, Emilio, 50007 Zaragoza (ES)
(86) Internationale Anmeldenummer: PCT/IB2019/051283
(87) Internationale Veröffentlichungsnummer: WO 2019/166909

(56) Entgegenhaltungen:
- EP-A1- 2 916 432
- WO-A1-2013/098016
- WO-A1-2016/185303
- WO-A1-2017/064803
- JP-B2- 3 363 239

## Beschreibung

Die Erfindung betrifft ein Garsystem nach dem Oberbegriff des Anspruchs 1 .

Aus der internationalen Patentanmeldung WO 2016/185303 A1 ist bereits ein Garsystem mit einer Aufstelleinheit bekannt, welche ein Gargutaufnahmeelement und eine Heizeinheit aufweist. Die Heizeinheit ist in einer Gehäuseeinheit der Aufstelleinheit integriert, welche einstückig mit dem Gargutaufnahmeelement ausgebildet ist. In der Gehäuseeinheit ist zudem eine Empfangseinheit integriert, welche einen Teil einer von einer Induktionseinheit bereitgestellten Heizenergie empfängt und die Heizeinheit mit einem Teil der empfangenen Heizenergie versorgt. Die Heizeinheit ist hierbei als Induktionseinheit ausgebildet und zu einer induktiven Beheizung des Gargutaufnahmeelements vorgesehen. Das Gargutaufnahmeelement wird in einem Betriebszustand ausschließlich induktiv beheizt.

Die Aufgabe der Erfindung besteht insbesondere darin, ein gattungsgemäßes System mit verbesserten Eigenschaften hinsichtlich einer Effizienz bereitzustellen. Die Aufgabe wird erfindungsgemäß durch die Merkmale der Ansprüche 1 und 2 gelöst, während vorteilhafte Ausgestaltungen und Weiterbildungen der Erfindung den Unteransprüchen entnommen werden können.

Die Erfindung geht aus von einem Garsystem nach den Ansprüchen 1 und 2.

Durch die erfindungsgemäße Ausgestaltung kann insbesondere eine hohe Effizienz, insbesondere im Hinblick auf eine Wärmeverteilung insbesondere in zumindest einem Boden des Gargeschirraufnahmeelements und/oder auf eine Leistungsverteilung, erreicht werden. Insbesondere kann ein hoher Leistungsfaktor und/oder Wirkleistungsfaktor erzielt werden, wodurch insbesondere ein geringer Strom durch eine Elektronik und/oder eine geringe an einer Resonanzkapazität anliegende elektrische Spannung ermöglicht werden kann. Es können insbesondere geringe Betriebstemperaturen, insbesondere der Heizeinheit, und/oder ein geringer elektrischer Strom durch eine Elektronik, insbesondere durch eine Garelektronik, ermöglicht werden, wodurch insbesondere eine langlebige Ausgestaltung erzielt werden kann. Insbesondere kann eine hohe Flexibilität und/oder eine hohe Gestaltungsfreiheit ermöglicht werden.

Unter einem "Garsystem" soll insbesondere ein System verstanden werden, welches zumindest ein Gargerät aufweist, das zu einem Garen von Lebensmitteln vorgesehen ist, wie beispielsweise ein Backofen und/oder ein Kochfeld und/oder eine Mikrowelle, und welches insbesondere zusätzlich zumindest eine weitere Baueinheit aufweisen könnte, die von einem Gargerät verschieden ausgebildet ist, wie insbesondere ein Reinigungsgerät und/oder ein Kältegerät und/oder ein Mobilgerät und/oder zumindest ein Kontaktmodul. Insbesondere ist das Garsystem dazu vorgesehen, zumindest eine Baueinheit aufzuweisen, welche zu einer Anordnung in einer Küche vorgesehen ist. Das Garsystem könnte beispielsweise zumindest eine Zubehöreinheit für das Gargerät aufweisen, wie beispielsweise eine Sensoreinheit zur externen Messung einer Temperatur eines Gargeschirrs und/oder eines Garguts und/oder der Aufstelleinheit und/oder des Gargutaufnahmeelements.

Insbesondere weist das Garsystem zumindest eine Aufstellplatte auf, welche insbesondere zu einem Aufstellen des Gargeschirrs und/oder des Gargutaufnahmeelements vorgesehen ist. Unter einer "Aufstellplatte" soll insbesondere zumindest eine insbesondere plattenartige Einheit verstanden werden, welche zu einem Aufstellen wenigstens eines Gargeschirrs und/oder zu einem Aufstellen wenigstens eines Gargutaufnahmeelements und/oder zu einem Auflegen wenigstens eines Garguts zum Zweck der Beheizung vorgesehen ist. Die Aufstellplatte könnte beispielsweise als ein Teilbereich zumindest einer Arbeitsplatte, insbesondere zumindest einer Küchenarbeitsplatte, insbesondere des Garsystems, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldau-ßengehäuse wenigstens zu einem Großteil ausbilden. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Metall und/oder aus Kunststoff und/oder aus Keramik gebildet sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Unter einer "Aufstelleinheit" soll insbesondere eine Einheit verstanden werden, welche zu einer Kopplung mit der Heizeinheit vorgesehen ist und welche insbesondere im Zuge der Kopplung mit der Heizeinheit in wenigstens einem Betriebszustand Energie von der Heizeinheit empfängt und/oder aufnimmt. Beispielsweise könnte das Gargutaufnahmeelement zu einem Aufstellen auf der Aufstellplatte vorgesehen sein. Alternativ oder zusätzlich könnte die Aufstelleinheit, insbesondere zusätzlich zu dem Gargutaufnahmeelement, beispielsweise zumindest eine Unterlegvorrichtung aufweisen, welche insbesondere zu einem Aufstellen zumindest eines Gargeschirrs und/oder zumindest eines Gargutaufnahmeelements, insbesondere des Gargutaufnahmeelements, vorgesehen sein könnte.

Unter einem "Gargutaufnahmeelement" soll insbesondere ein Element verstanden werden, welches zumindest einen Aufnahmeraum, welcher zu einer Aufnahme zumindest eines Garguts vorgesehen ist, begrenzt und/oder definiert und welches insbesondere zu einer Beheizung durch die Heizeinheit vorgesehen ist. Insbesondere besteht das Gargutaufnahmeelement wenigstens zu einem Großteil aus zumindest einem beheizbaren Material. Beispielsweise könnte das Gargutaufnahmeelement wenigstens zu einem Großteil aus einem Metall, wie insbesondere Aluminium und/oder Kupfer, ausgebildet sein. Das Gargutaufnahmeelement weist insbesondere eine den Aufnahmeraum wenigstens teilweise umgebende Wandung auf, welche insbesondere wenigstens zu einem Großteil aus dem beheizbaren Material ausgebildet sein könnte.

Unter einer "Heizeinheit" soll in diesem Zusammenhang insbesondere eine Einheit verstanden werden, welche dazu vorgesehen ist, in wenigstens einem Betriebszustand zumindest einem Gargeschirr und/oder zumindest einem Gargutaufnahmeelement Energie zum Zweck einer Beheizung des Gargeschirrs und/oder des Gargutaufnahmeelements zuzuführen. Beispielsweise könnte die Heizeinheit als Widerstandsheizeinheit ausgebildet sein und insbesondere dazu vorgesehen sein, Energie in Wärme umzuwandeln und diese dem Gargeschirr und/oder dem Gargutaufnahmeelement zum Zweck einer Beheizung des Gargeschirrs und/oder des Gargutaufnahmeelements zuzuführen. Alternativ oder zusätzlich könnte die Heizeinheit als Induktionsheizeinheit ausgebildet sein und insbesondere dazu vorgesehen sein, Energie in Form eines elektromagnetischen Wechselfelds dem Gargeschirr und/oder dem Gargutaufnahmeelement zuzuführen, wobei die dem Gargeschirr und/oder dem Gargutaufnahmeelement zugeführte Energie insbesondere in dem Gargeschirr und/oder dem Gargutaufnahmeelement in Wärme umgewandelt werden könnte.

Unter einer "Induktionseinheit" soll insbesondere eine Einheit verstanden werden, welche dazu vorgesehen ist, in wenigstens einem Betriebszustand zumindest ein elektromagnetisches Wechselfeld zu einer Energieübertragung bereitzustellen und insbesondere die Heizenergie mittels des elektromagnetischen Wechselfelds insbesondere induktiv und vorteilhaft drahtlos zu übertragen. Die Induktionseinheit ist insbesondere dazu vorgesehen, in wenigstens einem Betriebszustand mittels des elektromagnetischen Wechselfelds in der Aufstelleinheit, insbesondere in dem Gargutaufnahmeelement der Aufstelleinheit und/oder in der Heizeinheit der Aufstelleinheit und/oder in zumindest einer Empfangseinheit der Aufstelleinheit, zumindest einen Induktionsstrom zu erzeugen und/oder hervorzurufen und damit insbesondere die Heizenergie an die Aufstelleinheit insbesondere drahtlos zu übertragen.

Die Induktionseinheit könnte beispielsweise zumindest ein von einem Induktionsheizelement verschieden ausgebildetes Energieübertragungselement aufweisen, welches insbesondere dazu vorgesehen sein könnte, in wenigstens einem Betriebszustand die Heizenergie zu der induktiven Beheizung des Gargutaufnahmeelements bereitzustellen. Insbesondere könnte das Energieübertragungselement zumindest einen Induktor und/oder zumindest eine Spule aufweisen. Das Energieübertragungselement könnte insbesondere dazu vorgesehen sein, in wenigstens einem Betriebszustand die Heizenergie zu der induktiven Beheizung des Gargutaufnahmeelements zumindest mittels einer induktiven Energieübertragung bereitzustellen, und zwar insbesondere an zumindest eine Empfangseinheit der Aufstelleinheit. Alternativ oder zusätzlich könnte die Induktionseinheit zumindest ein Induktionsheizelement aufweisen, welches insbesondere dazu vorgesehen ist, in wenigstens einem Betriebszustand die Heizenergie zu der induktiven Beheizung des Gargutaufnahmeelements bereitzustellen. Die Induktionseinheit könnte beispielsweise dazu vorgesehen sein, in wenigstens einem Betriebszustand mittels des elektromagnetischen Wechselfelds in dem Gargutaufnahmeelement der Aufstelleinheit zumindest einen Induktionsstrom zu erzeugen und/oder hervorzurufen und das Gargutaufnahmeelement insbesondere unmittelbar und/oder direkt mit der Heizenergie induktiv zu beheizen. Das Induktionsheizelement der Induktionseinheit könnte insbesondere als eine Primärspule ausgebildet sein.

Unter der Wendung, dass die Induktionseinheit in wenigstens einem Betriebszustand "zumindest" eine Heizenergie zumindest zu einer induktiven Beheizung des Gargutaufnahmeelements bereitstellt, soll insbesondere verstanden werden, dass die Induktionseinheit in wenigstens einem Betriebszustand die Heizenergie zu der induktiven Beheizung des Gargutaufnahmeelements bereitstellt und insbesondere zusätzlich zu der Heizenergie zu der induktiven Beheizung des Gargutaufnahmeelements zumindest eine weitere Energie bereitstellen könnte, welche insbesondere zu einem weiteren Zweck vorgesehen sein könnte. Die weitere Energie könnte beispielsweise zu einer Versorgung zumindest einer Elektronikeinheit vorgesehen sein. Insbesondere könnte die Induktionseinheit in wenigstens einem Betriebszustand insbesondere zusätzlich zu der Heizenergie zu der induktiven Beheizung des Gargutaufnahmeelements zumindest eine Versorgungsenergie zu einer Versorgung zumindest einer Elektronikeinheit bereitstellen. Alternativ oder zusätzlich könnte die weitere Energie insbesondere eine weitere Heizenergie sein, welche insbesondere zu einer Beheizung des Gargutaufnahmeelements vorgesehen und von einer induktiven Beheizung verschieden sein könnte. Insbesondere könnte die Induktionseinheit in wenigstens einem Betriebszustand insbesondere zusätzlich zu der Heizenergie zu der induktiven Beheizung des Gargutaufnahmeelements zumindest eine weitere Heizenergie zu einer Versorgung zumindest eines von einem Induktionsheizelement verschieden ausgebildeten Heizelements bereitstellen. Die weitere Energie könnte alternativ oder zusätzlich insbesondere zumindest eine Verlustenergie sein, welche insbesondere bei einer Übertragung der Heizenergie mittels Dissipation verloren gehen könnte.

Unter der Wendung, dass die Induktionseinheit in wenigstens einem Betriebszustand zumindest eine Heizenergie "zumindest" zu einer induktiven Beheizung des Gargutaufnahmeelements bereitstellt, soll insbesondere verstanden werden, dass zumindest ein Teil der Heizenergie zu einer induktiven Beheizung des Gargutaufnahmeelements vorgesehen ist und insbesondere zusätzlich zumindest ein weiterer Teil der Heizenergie zu einer Beheizung des Gargutaufnahmeelements vorgesehen sein könnte, welche von einer induktiven Beheizung des Gargutaufnahmeelements abweicht. Unter der Wendung, dass die Induktionseinheit in wenigstens einem Betriebszustand zumindest eine Heizenergie zumindest zu einer induktiven Beheizung des Gargutaufnahmeelements "bereitstellt", soll insbesondere verstanden werden, dass die Induktionseinheit in wenigstens einem Betriebszustand das Gargutaufnahmeelement mit der Heizenergie insbesondere unmittelbar und/oder direkt beheizt und/oder dass die Induktionseinheit die Heizenergie an zumindest eine weitere Einheit, wie beispielsweise an zumindest eine Empfangseinheit der Aufstelleinheit, bereitstellt, welche insbesondere anschließend mit zumindest einem Teil der empfangenen Heizenergie das Gargutaufnahmeelement induktiv beheizt.

Unter einem "Betriebszustand" soll insbesondere ein Zustand verstanden werden, in welchem die Aufstelleinheit insbesondere auf der Aufstellplatte und vorteilhaft an zumindest einer durch die Aufstellplatte definierten Sollaufstellposition aufgestellt ist und in welchem die Induktionseinheit insbesondere die Heizenergie der Aufstelleinheit insbesondere unmittelbar und/oder mittelbar zuführt.

Unter einem "Induktionsheizelement" soll in diesem Zusammenhang insbesondere ein Element verstanden werden, welches dazu vorgesehen ist, ein elektromagnetisches Wechselfeld insbesondere mit einer Frequenz von 20 kHz bis 100 kHz zu erzeugen, das insbesondere dazu vorgesehen ist, in zumindest einem insbesondere metallischen, vorzugsweise ferromagnetischen Boden, insbesondere des Gargutaufnahmeelements, durch Wirbelstrominduktion und/oder Ummagnetisierungseffekte in Wärme umgewandelt zu werden. Unter einem "von dem Induktionsheizelement verschieden ausgebildeten Heizelement" soll insbesondere ein elektrisches Element verstanden werden, welches in wenigstens einem Betriebszustand zumindest eine von einer induktiven Heizenergie verschiedene Heizenergie zu einer Beheizung des Gargutaufnahmeelements bereitstellt. Das von dem Induktionsheizelement verschieden ausgebildete Heizelement könnte beispielsweise ein Strahlungsheizelement sein und insbesondere das Gargutaufnahmeelement in wenigstens einem Betriebszustand mittels elektromagnetischer Strahlung, beispielsweise mittels Infrarot-Strahlung, beheizen. Alternativ oder zusätzlich könnte das von dem Induktionsheizelement verschieden ausgebildete Heizelement beispielsweise ein Widerstandsheizelement sein und insbesondere das Gargutaufnahmeelement in wenigstens einem Betriebszustand mittels einer Heizenergie beheizen, welche das Heizelement insbesondere durch Umwandlung einer dem Heizelement zur Verfügung gestellten elektrischen Energie in thermische Energie bereitstellt.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Beispielsweise könnte die Induktionseinheit, insbesondere das Induktionsheizelement der Induktionseinheit, in wenigstens einem Betriebszustand mittels zumindest eines Teils der Heizenergie zu der induktiven Beheizung des Gargutaufnahmeelements das Gargutaufnahmeelement direkt und/oder unmittelbar erhitzen und insbesondere zumindest einen Teil der Heizenergie direkt und/oder unmittelbar an das Gargutaufnahmeelement übertragen. Vorzugsweise weist die Aufstelleinheit zumindest eine Empfangseinheit auf, welche zu einem drahtlosen Empfang zumindest eines Teils der Heizenergie und zu einer Versorgung des Heizelements mit zumindest einem Teil der empfangenen Energie vorgesehen ist. Insbesondere ist die Induktionseinheit, insbesondere das Induktionsheizelement, dazu vorgesehen, in wenigstens einem Betriebszustand mittels zumindest eines Teils der Heizenergie zu der induktiven Beheizung des Gargutaufnahmeelements das Gargutaufnahmeelement indirekt und/oder mittelbar zu erhitzen und insbesondere zumindest einen Teil der Heizenergie indirekt und/oder mittelbar an das Gargutaufnahmeelement zu übertragen. Die Induktionseinheit, insbesondere das Induktionsheizelement, ist insbesondere dazu vorgesehen, in wenigstens einem Betriebszustand zumindest einen Teil der Heizenergie an die Empfangseinheit zu übertragen und insbesondere das Gargutaufnahmeelement indirekt und/oder mittelbar über die Empfangseinheit zu erhitzen. Die Empfangseinheit könnte insbesondere zumindest eine Spule und/oder zumindest einen Induktor und/oder zumindest ein Induktionsheizelement aufweisen. Dadurch kann insbesondere eine optimale Beheizung des Gargutaufnahmeelements ermöglicht werden. Insbesondere kann eine hohe Flexibilität erzielt werden, da insbesondere auf eine Verdrahtung verzichtet werden kann.

Die Heizeinheit könnte beispielsweise ausschließlich das von dem Induktionsheizelement verschieden ausgebildete Heizelement aufweisen und insbesondere frei von Induktionsheizelementen sein. Vorzugsweise weist die Heizeinheit zusätzlich zu dem Heizelement zumindest ein Induktionsheizelement auf, welches in wenigstens einem Betriebszustand das Gargutaufnahmeelement mit zumindest einem Teil der empfangenen Energie induktiv beheizt. Dadurch kann insbesondere eine besonders hohe Effizienz und/oder eine hohe Flexibilität und/oder eine gleichmäßige Beheizung des Gargutaufnahmeelements erreicht werden, da das Gargutaufnahmeelement insbesondere sowohl induktiv als auch auf eine von einer induktiven Beheizung verschiedene Art beheizt werden kann.

Beispielsweise könnte die Empfangseinheit von dem Induktionsheizelement verschieden ausgebildet sein und insbesondere in wenigstens einem Betriebszustand zu einer Versorgung des Induktionsheizelements mit zumindest einem Teil der empfangenen Energie vorgesehen sein. Vorzugsweise ist das Induktionsheizelement wenigstens teilweise Teil der Empfangseinheit. Die Empfangseinheit und das Induktionsheizelement der Heizeinheit sind insbesondere einstückig ausgebildet. Das Induktionsheizelement der Heizeinheit könnte insbesondere als eine Repeaterspule ausgebildet sein und insbesondere dazu vorgesehen sein, von dem als Primärspule ausgebildeten Induktionsheizelement der Induktionseinheit Energie und/oder zumindest ein elektromagnetisches Wechselfeld zu empfangen. Unter der Wendung, dass ein erstes Objekt "wenigstens teilweise" Teil eines zweiten Objekts ist, soll insbesondere verstanden werden, dass das erste Objekt zumindest einen Teilbereich, insbesondere zumindest ein Element und/oder zumindest eine Einheit, aufweist, welcher Teil des zweiten Objekts ist und insbesondere zusätzlich zu dem Teilbereich zumindest einen weiteren Teilbereich aufweisen könnte, welcher insbesondere Teil zumindest eines von dem zweiten Objekt verschiedenen dritten Objekts sein könnte. Dadurch kann insbesondere eine geringe Lagerhaltung und/oder eine geringe Bauteilevielfalt erzielt werden. Durch die Kopplung der Induktionseinheit und der Empfangseinheit, von welcher insbesondere das Induktionsheizelement wenigstens teilweise Teil ist, können Verluste insbesondere auf beide Baueinheiten verteilt werden, wodurch insbesondere eine geringe Temperatur der Induktionseinheit erzielt werden kann. Insbesondere können Verluste der Empfangseinheit zu einer Beheizung des Gargutaufnahmeelements verwendet werden.

Weist die Empfangseinheit und/oder das Induktionsheizelement bei einer senkrechten Betrachtung auf eine Haupterstreckungsebene des Induktionsheizelements eine gleiche Flächenerstreckung wie das Gargutaufnahmeelement auf, kann insbesondere eine optimierte Leistungsverteilung erreicht werden, und zwar insbesondere unabhängig von einer Flächenerstreckung der Induktionseinheit.

Bei einer insbesondere aus dem Stand der Technik bekannten insbesondere gewöhnlichen Beheizung des Gargutaufnahmeelements, bei welcher ein Induktionsheizelement der Induktionseinheit das Gargutaufnahmeelement insbesondere direkt und/oder unmittelbar beheizt, ist in der Regel bei einer senkrechten Betrachtung auf eine Haupterstreckungsebene der Induktionseinheit ein innerer Teilbereich und ein äußerer Teilbereich des Gargutaufnahmeelements weniger gut beheizt wie ein sich dazwischen befindlicher ringförmiger Teilbereich. Das Heizelement kann bei einer senkrechten Betrachtung auf eine Haupterstreckungsebene der Induktionseinheit in wenigstens einem Betriebszustand insbesondere wenigstens teilweise in dem inneren Teilbereich und/oder wenigstens teilweise in dem äußeren Teilbereich angeordnet werden, wodurch insbesondere eine besonders gleichmäßig Beheizung des Gargutaufnahmeelements ermöglicht werden kann.

Ferner wird vorgeschlagen, dass das Induktionsheizelement und das Heizelement elektrisch in Reihe geschaltet sind, wodurch insbesondere eine einfache und/oder kostengünstige und/oder unkomplizierte Ausgestaltung erzielt werden kann.

Zudem wird vorgeschlagen, dass die Aufstelleinheit zumindest eine Resonanzkapazität aufweist, welche mit dem Induktionsheizelement elektrisch leitend verbunden ist. Insbesondere sind das Induktionsheizelement und die Resonanzkapazität elektrisch in Reihe geschaltet. Die Resonanzkapazität weist insbesondere zumindest einen Kondensator auf. Beispielsweise könnte die Resonanzkapazität zumindest zwei, insbesondere zumindest drei, vorteilhaft zumindest vier und vorzugsweise mehrere Kapazitäten aufweisen, welche insbesondere in einer insbesondere beliebigen Reihenschaltung und/oder Parallelschaltung angeordnet sein könnten. Vorteilhaft weist die Resonanzkapazität genau einen Kondensator auf und besteht insbesondere aus dem Kondensator. Dadurch kann das Induktionsheizelement insbesondere mit seiner Resonanzfrequenz betrieben werden, wodurch insbesondere eine hohe Effizienz und/oder geringe Verluste ermöglicht werden können. Insbesondere kann eine geringe Spannung in der Resonanzkapazität ermöglicht werden.

Beispielsweise könnten das Induktionsheizelement und das Heizelement bei einer senkrechten Betrachtung auf eine Haupterstreckungsebene des Induktionsheizelements und/oder bei einer senkrechten Betrachtung auf eine Haupterstreckungsebene einer Aufstellplatte wenigstens im Wesentlichen die gleiche Form und/oder Gestalt und/oder Größe und/oder Flächenerstreckung aufweisen und insbesondere überlappend und/oder deckungsgleich angeordnet sein. Vorzugsweise umgibt das Induktionsheizelement, insbesondere zumindest ein Teil des Induktionsheizelements, bei einer senkrechten Betrachtung auf eine Haupterstreckungsebene des Induktionsheizelements und/oder bei einer senkrechten Betrachtung auf eine Haupterstreckungsebene einer Aufstellplatte zumindest einen Teil des Heizelements. Beispielsweise könnte das Induktionsheizelement bei einer senkrechten Betrachtung auf eine Haupterstreckungsebene des Induktionsheizelements und/oder bei einer senkrechten Betrachtung auf eine Haupterstreckungsebene einer Aufstellplatte das insbesondere gesamte Heizelement umgeben. Insbesondere ist der Teil des Heizelements, welcher insbesondere von dem Induktionsheizelement umgeben ist, bei einer senkrechten Betrachtung auf eine Haupterstreckungsebene des Induktionsheizelements und/oder bei einer senkrechten Betrachtung auf eine Haupterstreckungsebene einer Aufstellplatte wenigstens im Wesentlichen um einen Mittelpunkt und/oder Schwerpunkt des Induktionsheizelements herum angeordnet. Dadurch kann insbesondere in einem inneren Bereich des Induktionsheizelements, welcher insbesondere unter Abwesenheit des Heizelements lediglich gering beheizt werden würde, optimal beheizt werden. Insbesondere können sich das Induktionsheizelement und das Heizelement optimal zu der Beheizung des Gargutaufnahmeelements ergänzen, wodurch insbesondere eine optimale Beheizung und/oder optimale Garergebnisse erzielt werden können.

Beispielsweise könnte das insbesondere gesamte Induktionsheizelement bei einer senkrechten Betrachtung auf eine Haupterstreckungsebene des Induktionsheizelements und/oder bei einer senkrechten Betrachtung auf eine Haupterstreckungsebene einer Aufstellplatte das insbesondere gesamte Heizelement umgeben. Das insbesondere gesamte Induktionsheizelement könnte beispielsweise konzentrisch um das insbesondere gesamte Heizelement herum angeordnet sein. Vorzugsweise umgibt das Heizelement, insbesondere zumindest ein Teil des Heizelements, bei einer senkrechten Betrachtung auf eine Haupterstreckungsebene des Induktionsheizelements und/oder bei einer senkrechten Betrachtung auf eine Haupterstreckungsebene einer Aufstellplatte zumindest einen Teil des Induktionsheizelements und insbesondere zusätzlich den von dem Induktionsheizelement umgebenen Teil des Heizelements. Dadurch kann insbesondere eine hohe Flexibilität und/oder eine hohe Gestaltungsfreiheit erzielt werden.

Bei einer senkrechten Betrachtung auf eine Haupterstreckungsebene der Induktionseinheit und/oder bei einer senkrechten Betrachtung auf eine Haupterstreckungsebene einer Aufstellplatte könnten die Induktionseinheit und das Induktionsheizelement in wenigstens einem Betriebszustand insbesondere die gleiche Flächenerstreckung aufweisen und/oder insbesondere überlappend angeordnet sein. Alternativ oder zusätzlich könnte das Induktionsheizelement bei einer senkrechten Betrachtung auf eine Haupterstreckungsebene der Induktionseinheit und/oder bei einer senkrechten Betrachtung auf eine Haupterstreckungsebene einer Aufstellplatte innerhalb einer von der Induktionseinheit aufgespannten Fläche angeordnet sein. Vorzugsweise ist die Induktionseinheit bei einer senkrechten Betrachtung auf eine Haupterstreckungsebene der Induktionseinheit und/oder bei einer senkrechten Betrachtung auf eine Haupterstreckungsebene einer Aufstellplatte in wenigstens einem Betriebszustand innerhalb einer von dem Induktionsheizelement aufgespannten Fläche angeordnet. Bei einer senkrechten Betrachtung auf eine Haupterstreckungsebene der Induktionseinheit und/oder bei einer senkrechten Betrachtung auf eine Haupterstreckungsebene einer Aufstellplatte weist die Induktionseinheit insbesondere eine kleinere Flächenerstreckung auf als das Induktionsheizelement. Dadurch kann insbesondere eine besonders hohe Effizienz erreicht werden, und zwar insbesondere im Hinblick auf eine Energieübertragung zwischen der Induktionseinheit und dem Induktionsheizelement.

Weiterhin wird vorgeschlagen, dass das Gargutaufnahmeelement und die Induktionseinheit in wenigstens einem Betriebszustand einen Abstand von mindestens 10 mm, insbesondere von mindestens 15 mm, vorteilhaft von mindestens 20 mm, besonders vorteilhaft von mindestens 25 mm und vorzugsweise von mindestens 30 mm aufweisen. Insbesondere weisen das Gargutaufnahmeelement und die Induktionseinheit in wenigstens einem Betriebszustand einen Abstand von maximal 500 mm, insbesondere von maximal 250 mm, vorteilhaft von maximal 100 mm, besonders vorteilhaft von maximal 80 mm und vorzugsweise von maximal 60 mm auf. Die Aufstellplatte ist in wenigstens einem Betriebszustand insbesondere zwischen der Induktionseinheit und der Aufstelleinheit angeordnet. Dadurch kann insbesondere eine optimale Beheizung des Gargutaufnahmeelements selbst über große Distanzen ermöglicht werden. Insbesondere kann eine Anordnung der Aufstellplatte zwischen der Induktionseinheit und der Aufstelleinheit ermöglicht werden, und zwar insbesondere zeitgleich mit einer hohen Flexibilität bei einer Gestaltung einer Dicke und damit insbesondere eines Materials der Aufstellplatte.

Erfindungsgemäß weist die Aufstelleinheit zumindest eine Gehäuseeinheit auf, in welcher die Heizeinheit und insbesondere die Empfangseinheit wenigstens teilweise integriert ist. Unter der Wendung, dass ein erstes Objekt "wenigstens teilweise" in einem zweiten Objekt integriert ist, soll insbesondere verstanden werden, dass das erste Objekt zumindest einen Teilbereich, insbesondere zumindest ein Element und/oder zumindest eine Einheit, aufweist, welches in dem zweiten Objekt integriert ist und insbesondere zusätzlich zu dem Teilbereich zumindest einen weiteren Teilbereich aufweisen könnte, welcher insbesondere in zumindest einem von dem zweiten Objekt verschiedenen dritten Objekt integriert sein könnte. Unter der Wendung, dass ein erstes Objekt in einem zweiten Objekt "integriert" ist, soll insbesondere verstanden werden, dass das erste Objekt innerhalb des zweiten Objekts angeordnet und insbesondere von dem zweiten Objekt umgeben ist. Die Gehäuseeinheit definiert insbesondere eine äußere Begrenzung und/oder Wandung der Aufstelleinheit, welche insbesondere für einen Bediener anfassbar und/oder zugänglich und/oder sichtbar angeordnet ist. Insbesondere ist die Gehäuseeinheit als eine Außengehäuseeinheit ausgebildet. Dadurch kann insbesondere eine geschützte Anordnung der Heizeinheit und/oder der Empfangseinheit ermöglicht werden, wodurch insbesondere eine langlebige Ausgestaltung erzielt werden kann.

Erfindungsgemäß sind die Gehäuseeinheit und das Gargutaufnahmeelement einstückig ausgebildet . Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine hohe Stabilität und/oder eine geringe Bauteilevielfalt erreicht werden.

Die Heizeinheit und insbesondere die Empfangseinheit könnte beispielsweise ausschließlich und/oder vollständig in der Gehäuseeinheit integriert sein. Insbesondere könnte die Aufstelleinheit zumindest eine Unterlegvorrichtung aufweisen, welche insbesondre zu einem Aufstellen des Gargutaufnahmeelements und/oder der Gehäuseeinheit vorgesehen sein könnte und welche insbesondere frei von der Heizeinheit und/oder von der Empfangseinheit sein könnte. Erfindungsgemäβ weist die Aufstelleinheit zumindest eine Unterlegvorrichtung auf, welche zu einem Aufstellen des Gargutaufnahmeelements vorgesehen ist und in welcher die Heizeinheit wenigstens teilweise integriert ist. Die Heizeinheit und insbesondere die Empfangseinheit könnte beispielsweise wenigstens teilweise in der Gehäuseeinheit und wenigstens teilweise in der Unterlegvorrichtung integriert sein. Alternativ könnte die Heizeinheit und insbesondere die Empfangseinheit beispielsweise ausschließlich und/oder vollständig in der Unterlegvorrichtung integriert sein. Unter einer "Unterlegvorrichtung" soll insbesondere eine Vorrichtung verstanden werden, welche insbesondere zu einem Auflegen, insbesondere zu einer Platzierung, auf der Aufstellplatte und zu einem Aufstellen des Gargutaufnahmeelements und/oder der Gehäuseeinheit vorgesehen ist und welche insbesondere in wenigstens einem Betriebszustand eine Unterlage für das Gargutaufnahmeelement und/oder für die Gehäuseeinheit wenigstens teilweise ausbildet. In einer Einbaulage ist die Unterlegvorrichtung insbesondere zu einer Platzierung oberhalb der Heizeinheit vorgesehen. Insbesondere ist die Unterlegvorrichtung dazu vorgesehen, zumindest eine von dem aufgestellten Gargutaufnahmeelement und/oder von der aufgestellten Gehäuseeinheit kommende Wärmeenergie zu absorbieren und/oder an einem Erreichen der Aufstellplatte zu hindern. Dadurch kann insbesondere eine langlebige Ausgestaltung erzielt werden, da insbesondere eine geschützte Anordnung der Heizeinheit und/oder der Empfangseinheit ermöglicht und/oder insbesondere eine Beschädigung der Aufstellplatte, welche insbesondere durch eine Beheizung des Gargutaufnahmeelements und/oder der Gehäuseeinheit hervorgerufen sein könnte, vermieden werden.

Eine besonders hohe Effizienz kann insbesondere erreicht werden durch eine Aufstelleinheit eines Garsystems.

Eine Effizienz kann insbesondere weiter gesteigert werden durch ein Verfahren zu einem Betrieb eines Garsystems, bei welchem ein Gargutaufnahmeelement induktiv beheizt wird, wobei das Gargutaufnahmeelement zusätzlich zu der induktiven Beheizung auf zumindest eine von einer induktiven Beheizung verschiedene Weise beheizt wird, und zwar insbesondere mittels elektromagnetischer Strahlung und/oder mittels Wärmestrahlung.

Das Garsystem soll hierbei nicht auf die oben beschriebene Anwendung und Ausführungsform beschränkt sein. Insbesondere kann das Garsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Garsystem in einer schematischen Draufsicht,
- Fig. 2: einen Schnitt entlang der Linie II-II in Figur 1 in einer schematischen Darstellung, wobei elektrische Verbindungen strichpunktiert und eine Energieübertragung anhand von Pfeilen dargestellt sind,
- Fig. 3: eine elektrische Schaltung einer Versorgungseinheit und einer Induktionseinheit, von welcher ein Geräteheizelement des Garsystems Teil ist, des Garsystems in einer schematischen Darstellung,
- Fig. 4: eine elektrische Schaltung eines Heizelements einer Heizeinheit des Garsystems und einer Empfangseinheit des Garsystems, von welcher ein Induktionsheizelement der Heizeinheit Teil ist, in einer schematischen Darstellung,
- Fig. 5: einen Ausschnitt einer Kopplung der elektrischen Schaltungen aus Figuren 3 und 4 in einer schematischen Darstellung,
- Fig. 6: eine Draufsicht auf eine Haupterstreckungsebene des Induktionsheizelements in einer schematischen Darstellung, wobei der Einfachheit halber auf eine Darstellung einer Gehäuseeinheit einer Aufstelleinheit des Garsystems und einer Aufstellplatte des Garsystems verzichtet wurde,
- Fig. 7: ein Diagramm, in welchem ein Leistungsfaktor über einer Frequenz aufgetragen ist,
- Fig. 8: einen Ausschnitt eines alternativen Garsystems in einer schematischen Schnittdarstellung und
- Fig. 9: eine Heizeinheit einer Aufstelleinheit eines alternativen Garsystems in einer schematischen Draufsicht.

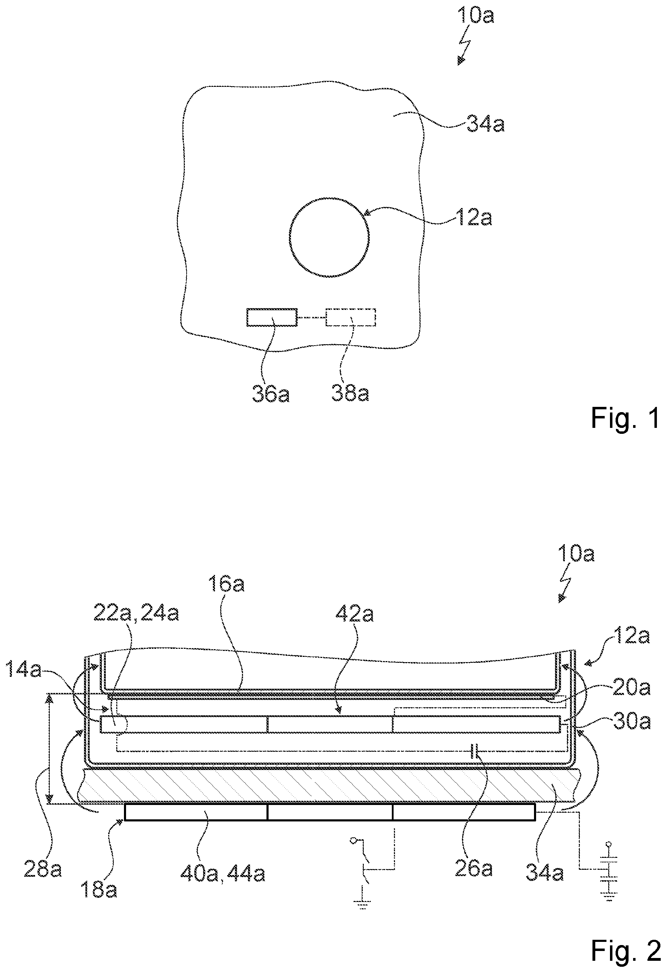

Fig. 1 zeigt ein Garsystem 10a, welches als ein Induktionsgarsystem ausgebildet ist. Das Garsystem 10a ist im vorliegenden Ausführungsbeispiel als ein Kochfeldsystem und insbesondere als ein Induktionskochfeldsystem ausgebildet.

Das Garsystem 10a weist eine Aufstellplatte 34a auf. Die Aufstellplatte 34a definiert eine Sollaufstellposition für eine Aufstelleinheit 12a (vgl. auch Fig. 2). In einem montierten Zustand bildet die Aufstellplatte 34a eine Sichtfläche aus, welche in einem montierten Zustand insbesondere einem Bediener zugewandt angeordnet ist. Die Aufstellplatte 34a ist zu einem Aufstellen der Aufstelleinheit 12a insbesondere an der Sollaufstellposition zu einer Beheizung vorgesehen (vgl. Fig. 1 und 2). Im vorliegenden Ausführungsbeispiel ist die Aufstellplatte 34a als eine Arbeitsplatte, insbesondere als eine Küchenarbeitsplatte, ausgebildet.

Das Garsystem 10a weist eine Bedienerschnittstelle 36a zu einer Eingabe und/oder Auswahl von Betriebsparametern auf, beispielsweise einer Heizleistung und/oder einer Heizleistungsdichte und/oder einer Heizzone. Die Bedienerschnittstelle 36a ist zu einer Ausgabe eines Werts eines Betriebsparameters an einen Bediener vorgesehen.

Das Garsystem 10a weist eine Steuereinheit 38a auf. Die Steuereinheit 38a ist dazu vorgesehen, in Abhängigkeit von mittels der Bedienerschnittstelle 36a eingegebener Betriebsparameter Aktionen auszuführen und/oder Einstellungen zu verändern. Die Steuereinheit 38a regelt in einem Heizbetriebszustand eine Energiezufuhr zu zumindest einem Geräteheizelement 40a.

Das Garsystem 10a weist zumindest ein Geräteheizelement 40a auf (vgl. Fig. 1 und 2). Im vorliegenden Ausführungsbeispiel weist das Garsystem 10a mehrere Geräteheizelemente 40a auf, von welchen in den Figuren lediglich eine dargestellt ist und von welchen im Folgenden lediglich eine beschrieben wird. Das Geräteheizelement 40a ist dazu vorgesehen, wenigstens eine auf der Aufstellplatte 34a oberhalb des Geräteheizelements 40a und insbesondere an der Sollaufstellposition aufgestellte Aufstelleinheit 12a zu erhitzen. Das Geräteheizelement 40a ist als ein Induktionsheizelement ausgebildet. Das Geräteheizelement 40a ist in einer Einbaulage unterhalb der Aufstellplatte 34a angeordnet, und zwar insbesondere unterhalb der Sollaufstellposition.

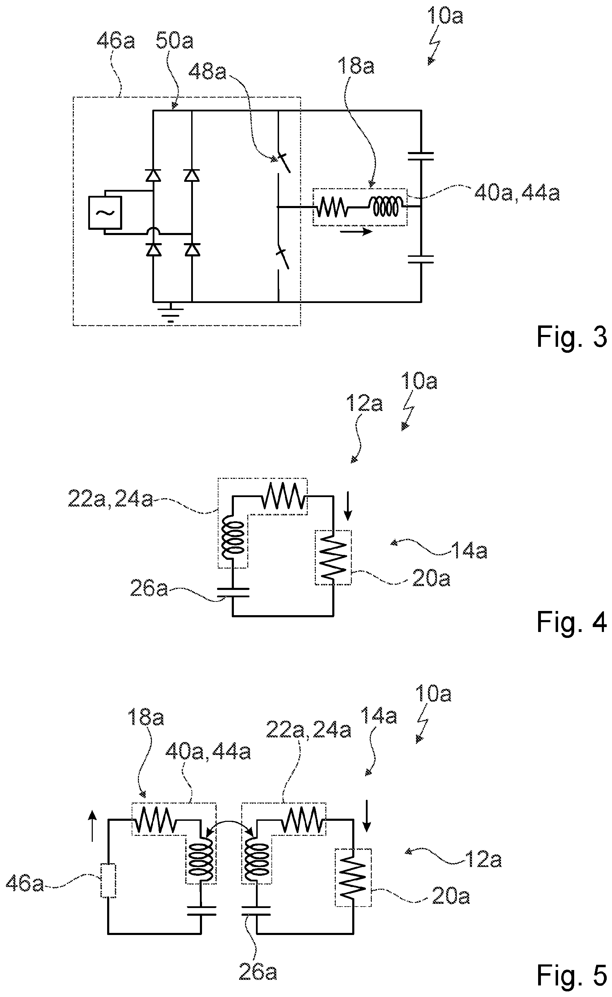

Das Garsystem 10a weist eine Versorgungseinheit 46a auf, welche zu einer Versorgung des Geräteheizelements 40a mit Energie vorgesehen ist (vgl. Fig. 3). Die Versorgungseinheit 46a ist in herkömmlicher Weise aufgebaut. Die Versorgungseinheit 46a weist einen Wechselrichter 48a auf. Der Wechselrichter 48a stellt in einem Betriebszustand einen hochfrequenten Wechselstrom zu der Versorgung des Geräteheizelements 40a bereit. Die Versorgungseinheit 46a weist einen Gleichrichter 50a auf. Der Gleichrichter 50a richtet in einem Betriebszustand eine Spannung gleich. Der Gleichrichter 50a und der Wechselrichter 48a sind elektrisch leitend miteinander verbunden.

Das Garsystem 10a weist die Aufstelleinheit 12a auf (vgl. Fig. 1 und 2). Die Aufstelleinheit 12a weist ein Gargutaufnahmeelement 16a auf. Das Gargutaufnahmeelement 16a ist zu einer Aufnahme von Lebensmitteln zum Zweck einer Beheizung der Lebensmittel vorgesehen. Das Gargutaufnahmeelement 16a besteht zu einem Großteil aus einem metallischen und insbesondere ferromagnetischen Material. Die Aufstelleinheit 12a ist speziell für das Garsystem 10a vorgesehen.

Die Aufstelleinheit 12a weist eine Heizeinheit 14a auf. Die Heizeinheit 14a ist zu einer Beheizung des Gargutaufnahmeelements 16a vorgesehen. In einem Betriebszustand führt die Heizeinheit 14a dem Gargutaufnahmeelement 16a Energie zu einer Beheizung des Gargutaufnahmeelements 16a zu.

Im vorliegenden Ausführungsbeispiel weist die Aufstelleinheit 12a eine Gehäuseeinheit 30a auf (vgl. Fig. 2). Die Gehäuseeinheit 30a ist als eine Außengehäuseeinheit ausgebildet. Die Gehäuseeinheit 30a und das Gargutaufnahmeelement 16a sind einstückig ausgebildet.

Die Gehäuseeinheit 30a und das Gargutaufnahmeelement 16a definieren und/oder umschließen gemeinsam einen Innenraum 42a. In einem Betriebszustand ist die Heizeinheit 14a in dem Innenraum 42a angeordnet. Die Heizeinheit 14a ist in einem Betriebszustand teilweise in der Gehäuseeinheit 30a integriert.

Zu einer Versorgung der Heizeinheit 14a mit Heizenergie weist das Garsystem 10a eine Induktionseinheit 18a auf. In einer Einbaulage ist die Induktionseinheit 18a unterhalb der Aufstellplatte 34a angeordnet, und zwar insbesondere unterhalb der Sollaufstellposition. Das Geräteheizelement 40a ist teilweise Teil der Induktionseinheit 18a.

In einem Betriebszustand stellt die Induktionseinheit 18a eine Heizenergie zumindest zu einer induktiven Beheizung des Gargutaufnahmeelements 16a bereit. Die Induktionseinheit 18a stellt die Heizenergie zu der induktiven Beheizung des Gargutaufnahmeelements 16a in Form eines elektromagnetischen Wechselfelds bereit. Die Induktionseinheit 18a weist einen Induktor 44a auf. In einem Betriebszustand stellt der Induktor 44a die Heizenergie zumindest zu einer induktiven Beheizung des Gargutaufnahmeelements 16a bereit. Der Induktor 44a und das Geräteheizelement 40a sind einstückig ausgebildet.

Beispielsweise könnte die Induktionseinheit 18a die Heizenergie unmittelbar und/oder direkt dem Gargutaufnahmeelement 16a zuführen. Im vorliegenden Ausführungsbeispiel führt die Induktionseinheit 18a die Heizenergie dem Geräteheizelement 40a mittelbar und/oder indirekt zu, und zwar insbesondere über die Heizeinheit 14a der Aufstelleinheit 12a.

Die Heizeinheit 14a weist ein von einem Induktionsheizelement verschieden ausgebildetes Heizelement 20a auf (vgl. Fig. 2, 4 und 5). Im vorliegenden Ausführungsbeispiel ist das Heizelement 20a als ein Widerstandsheizelement ausgebildet. Das Heizelement 20a ist zu einer Beheizung des Gargutaufnahmeelements 16a vorgesehen.

Die Aufstelleinheit 12a weist eine Empfangseinheit 22a auf (vgl. Fig. 2, 4 und 5). Die Empfangseinheit 22a ist zu einem drahtlosen Empfang zumindest eines Teils der Heizenergie vorgesehen. Die Empfangseinheit 22a weist ein Induktionsheizelement 24a auf, welches in einem Betriebszustand den Teil der Heizenergie von der Empfangseinheit 22a drahtlos empfängt. Die Induktionseinheit 18a ist zu einer induktiven Energieübertragung an die Empfangseinheit 22a vorgesehen. In einem Betriebszustand überträgt die Induktionseinheit 18a die Heizenergie induktiv an die Empfangseinheit 22a.

Die Empfangseinheit 22a ist zu einer Versorgung des Heizelements 20a mit zumindest einem Teil der empfangenen Energie vorgesehen. Die Empfangseinheit 22a und das Heizelement 20a sind elektrisch leitend miteinander verbunden. Im vorliegenden Ausführungsbeispiel sind die Empfangseinheit 22a und das Heizelement 20a elektrisch in Reihe geschaltet.

Zusätzlich zu dem Heizelement 20a weist die Heizeinheit 14a ein Induktionsheizelement 24a auf (vgl. Fig. 2, 4 und 5). Das Induktionsheizelement 24a ist teilweise Teil der Empfangseinheit 22a. Das Induktionsheizelement 24a der Heizeinheit 14 und das Induktionsheizelement 24a der Empfangseinheit 22a sind identisch. In einem Betriebszustand beheizt das Induktionsheizelement 24a das Gargutaufnahmeelement 16a mit zumindest einem Teil der von der Empfangseinheit 22a empfangenen Energie induktiv.

Das Induktionsheizelement 24a und das Heizelement 20a sind elektrisch in Reihe geschaltet (vgl. Fig. 2, 4 und 5). Die Aufstelleinheit 12a weist eine Resonanzkapazität 26a auf. Die Resonanzkapazität 26a weist im vorliegenden Ausführungsbeispiel einen Kondensator auf und ist insbesondere als der Kondensator ausgebildet. In einem Betriebszustand ist die Resonanzkapazität 26a mit dem Induktionsheizelement 24a elektrisch leitend verbunden.

Bei einer Betrachtung auf eine Haupterstreckungsebene des Induktionsheizelements 24a umgibt das Induktionsheizelement 24a einen Teil 52a des Heizelements 20a, und zwar insbesondere einen inneren Teil 52a des Heizelements 20a. Neben dem inneren Teil 52a des Heizelements 20a weist das Heizelement 20a einen äußeren Teil 54a auf. Bei einer Betrachtung auf eine Haupterstreckungsebene des Induktionsheizelements 24a umgibt das Heizelement 20a, und zwar insbesondere der äußere Teil 54a des Heizelements 20a, einen Teil 56a des Induktionsheizelements 24a, und zwar insbesondere einen inneren Teil 56a des Induktionsheizelements 24a.

Neben dem inneren Teil 56a des Induktionsheizelements 24a weist das Induktionsheizelement 24a einen äußeren Teil 58a auf. Bei einer Betrachtung auf eine Haupterstreckungsebene des Induktionsheizelements 24a umgibt das Induktionsheizelement 24a, und zwar insbesondere der äußere Teil 58a des Induktionsheizelements 24a, einen Teil 52a, 54a des Heizelements 20a, und zwar insbesondere den inneren Teil 52a des Heizelements 20a und den äußeren Teil 54a des Heizelements 20a.

Bei einer Betrachtung auf eine Haupterstreckungsebene des Induktionsheizelements 24a umgibt das Induktionsheizelement 24a die Induktionseinheit 18a. Die Induktionseinheit 18a ist bei einer senkrechten Betrachtung auf eine Haupterstreckungsebene der Induktionseinheit 18a in einem Betriebszustand innerhalb einer von dem Induktionsheizelement 24a aufgespannten Fläche angeordnet. Das Induktionsheizelement 24a weist bei einer Betrachtung auf eine Haupterstreckungsebene des Induktionsheizelements 24a eine Flächenerstreckung auf, welche größer ist als eine Flächenerstreckung der Induktionseinheit 18a.

In einem Betriebszustand sind das Gargutaufnahmeelement 16a und die Induktionseinheit 18a zueinander beabstandet angeordnet. Das Gargutaufnahmeelement 16a und die Induktionseinheit 18a weisen im vorliegenden Ausführungsbeispiel in einem Betriebszustand einen Abstand 28a von im Wesentlichen 34 mm auf (vgl. Fig. 2).

In einem Verfahren zu einem Betrieb des Garsystems 10a wird das Gargutaufnahmeelement 16a zusätzlich zu der induktiven Beheizung auf zumindest eine von einer induktiven Beheizung verschiedene Weise beheizt. Das Gargutaufnahmeelement 16a wird in einem Betriebszustand zusätzlich zu der induktiven Beheizung, insbesondere mittels des Induktionsheizelements 24a, mit dem Heizelement 20a beheizt, welches insbesondere ein Widerstandsheizelement ist.

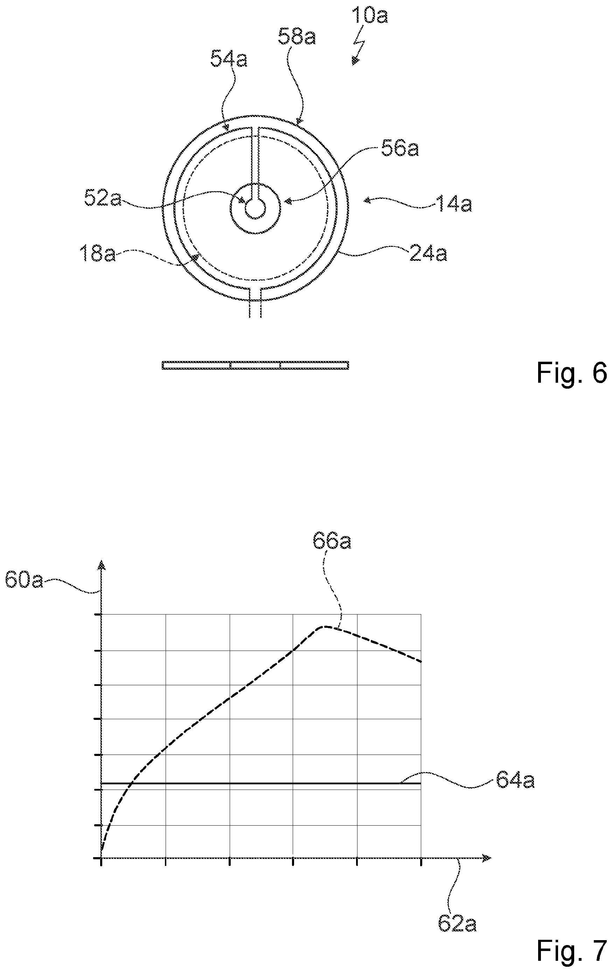

Fig. 7 zeigt ein Diagramm, in welchem ein Leistungsfaktor über einer Leistungaufgetragen ist. Auf einer Ordinatenachse 60a ist der Leistungsfaktor aufgetragen. Auf einer Abszissenachse 62a ist eine Leistungaufgetragen. Eine durchgezogen dargestellte Kurve 64a zeigt einen Verlauf des Leistungsfaktors über der Leistungfür eine Ausgestaltung, bei welcher ein Gargutaufnahmeelement direkt von dem Geräteheizelement 40a beheizt wird, und zwar insbesondere unter Vermeidung einer in der Aufstelleinheit 12a integrierten Heizeinheit 14a. Eine gestrichelt dargestellte Kurve 66a zeigt einen Verlauf des Leistungsfaktors über der Leistungfür eine Ausgestaltung, bei welcher das Gargutaufnahmeelement 16a von der in der Aufstelleinheit 12a integrierten Heizeinheit 14a beheizt wird.

Zu erkennen ist, dass in einem Großteil des Frequenzbereichs im Fall einer Beheizung des Gargutaufnahmeelements 16a mittels der in der Aufstelleinheit 12a integrierten Heizeinheit 14a ein höherer Leistungsfaktor erreicht werden kann als im Fall einer Beheizung des Gargutaufnahmeelements 16a ausschließlich mittels des Geräteheizelements 40a, und zwar insbesondere aufgrund einer Kopplung der Induktionseinheit 18a und der Empfangseinheit 22a.

Aufgrund einer Ähnlichkeit der Schaltung, in welcher die Induktionseinheit 18a angeordnet ist, und der Schaltung, in welcher die Heizeinheit 14a und/oder die Empfangseinheit 22a angeordnet ist, kann insbesondere erreicht werden, dass eine Gesamtimpedanz von einer Wicklungsanzahl des Induktionsheizelements 24a der Heizeinheit 14a unabhängig ist. Hierdurch kann insbesondere eine hohe Gestaltungsfreiheit ermöglicht werden, und zwar insbesondere im Hinblick auf eine Ausgestaltung und/oder Anordnung des Induktionsheizelements 24a der Heizeinheit 14a und/oder der Resonanzkapazität 26a. Insbesondere können ein elektrischer Strom und eine elektrische Spannung in der Schaltung, in welcher die Heizeinheit 14a und/oder die Empfangseinheit 22a angeordnet ist, frei gewählt werden, wie beispielsweise eine hohe Spannung und ein geringer Strom oder eine geringe Spannung und ein hoher Strom oder beliebige Zwischenwerte hiervon.

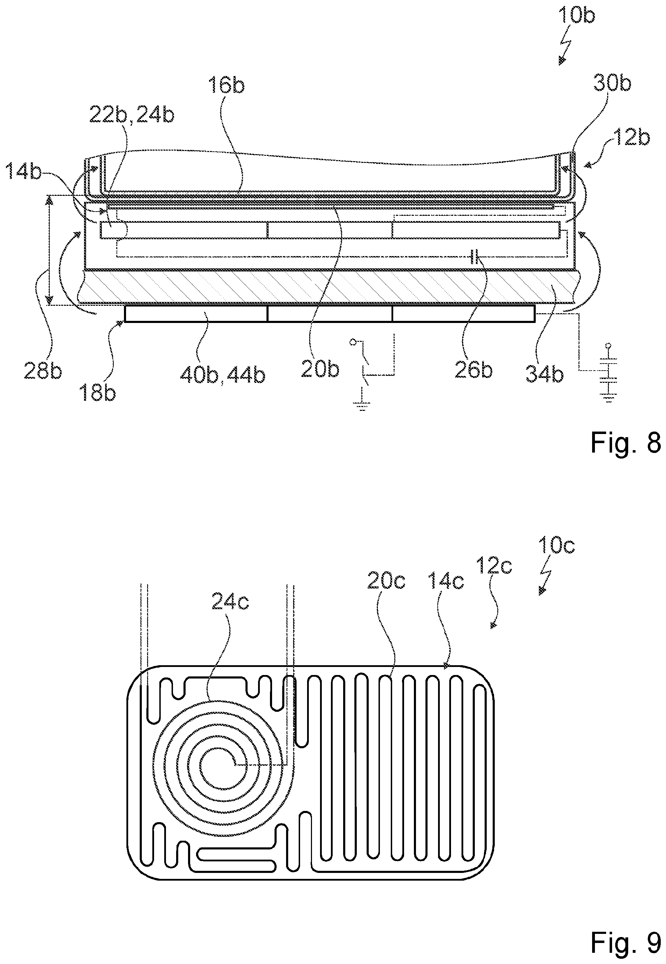

In Fig. 8 und 9 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 7 verwiesen werden kann. Zur Unterscheidung der Ausführungsbeispiele ist der Buchstabe a in den Bezugszeichen des Ausführungsbeispiels in den Fig. 1 bis 7 durch die Buchstaben b und c in den Bezugszeichen des Ausführungsbeispiels der Fig. 8 und 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 7 verwiesen werden.

Fig. 8 zeigt einen Ausschnitt eines alternativen Garsystems 10b, welches eine Aufstelleinheit 12b aufweist. Die Aufstelleinheit 12b weist eine Heizeinheit 14b und ein Gargutaufnahmeelement 16b auf. Die Aufstelleinheit 12b weist eine Gehäuseeinheit 30b auf. Die Gehäuseeinheit 30b und das Gargutaufnahmeelement 16b sind einstückig ausgebildet.

Zusätzlich zu der Gehäuseeinheit 30b weist die Aufstelleinheit 12b eine Unterlegvorrichtung 32b auf. Die Unterlegvorrichtung 32b ist zu einem Aufstellen des Gargutaufnahmeelements 16b, und insbesondere zusätzlich zu einem Aufstellen der Gehäuseeinheit 30b, vorgesehen. In einem Betriebszustand ist die Heizeinheit 14b teilweise in der Unterlegvorrichtung 32b integriert. Eine Empfangseinheit 22b der Aufstelleinheit 12b ist in einem Betriebszustand teilweise in der Unterlegvorrichtung 32b integriert.

Fig. 9 zeigt eine Draufsicht auf eine Heizeinheit 14c einer Aufstelleinheit 12c eines alternativen Garsystems 10c. Die Heizeinheit 14c weist ein von einem Induktionsheizelement verschieden ausgebildetes Heizelement 20c auf. Die Heizeinheit 14c weist ein Induktionsheizelement 24c auf, welches mit dem Heizelement 20c in Reihe geschaltet ist. Bei einer senkrechten Betrachtung auf eine Haupterstreckungsebene des Induktionsheizelements 24c umgibt das Heizelement 20c das Induktionsheizelement 24c. Das Heizelement 20c erstreckt sich bei einer senkrechten Betrachtung auf eine Haupterstreckungsebene des Induktionsheizelements 24c im Wesentlichen über eine gesamte Flächenerstreckung der Aufstelleinheit 12c. Bei einer senkrechten Betrachtung auf eine Haupterstreckungsebene des Induktionsheizelements 24c weist die Aufstelleinheit 12c im vorliegenden Ausführungsbeispiel eine im Wesentlichen längliche und/oder rechteckförmige Gestalt auf.

### Bezugszeichen

- 10: Garsystem
- 12: Aufstelleinheit
- 14: Heizeinheit
- 16: Gargutaufnahmeelement
- 18: Induktionseinheit
- 20: Heizelement
- 22: Empfangseinheit
- 24: Induktionsheizelement
- 26: Resonanzkapazität
- 28: Abstand
- 30: Gehäuseeinheit
- 32: Unterlegvorrichtung
- 34: Aufstellplatte
- 36: Bedienerschnittstelle
- 38: Steuereinheit
- 40: Geräteheizelement
- 42: Innenraum
- 44: Induktor
- 46: Versorgungseinheit
- 48: Wechselrichter
- 50: Gleichrichter
- 52: Teil
- 54: Teil
- 56: Teil
- 58: Teil
- 60: Ordinatenachse
- 62: Abszissenachse
- 64: Kurve
- 66: Kurve

## Patentansprüche

1. Garsystem mit zumindest einer Aufstelleinheit (12a-c), welche zumindest ein Gargutaufnahmeelement (16a-c) und zumindest eine Heizeinheit (14a-c) aufweist, die zu einer Beheizung des Gargutaufnahmeelements (16a-c) vorgesehen ist und die dazu vorgesehen ist, in wenigstens einem Betriebszustand dem Gargutaufnahmeelement (16a-c) Energie zum Zweck einer Beheizung des Gargutaufnahmeelements (16a-c) zuzuführen, und mit zumindest einer Induktionseinheit (18a-c), welche zumindest ein Induktionsheizelement (44a-c) aufweist und welche in wenigstens einem Betriebszustand zumindest eine Heizenergie zumindest zu einer induktiven Beheizung des Gargutaufnahmeelements (16a-c) bereitstellt, wobei die Heizeinheit (14a-c) zumindest ein von einem Induktionsheizelement verschieden ausgebildetes Heizelement (20a-c) aufweist, wobei das Heizelement (20a-c) zu einer Beheizung des Gargutaufnahmeelements (16a-c) vorgesehen ist, und wobei das Gargutaufnahmeelement (16a-c) zu einem Großteil aus einem ferromagnetischen Material besteht, **dadurch gekennzeichnet, dass** die Aufstelleinheit (12b) zumindest eine Unterlegvorrichtung (32b) aufweist, welche zu einem Aufstellen des Gargutaufnahmeelements (16b) vorgesehen und in welcher die Heizeinheit (14b) wenigstens teilweise integriert ist.

2. Garsystem zumindest nach dem Oberbegriff des Anspruchs 1 und insbesondere nach Anspruch 1, wobei die Aufstelleinheit (12a) zumindest eine Gehäuseeinheit (30a) aufweist, in welcher die Heizeinheit (14a) wenigstens teilweise integriert ist, und wobei zumindest das Heizelement (20a) in der Gehäuseeinheit (30a) integriert ist, **dadurch gekennzeichnet, dass** die Gehäuseeinheit (30a) und das Gargutaufnahmeelement (16a) einstückig ausgebildet sind.

3. Garsystem nach Anspruch 1 oder 2, **dadurch gekennzeichnet, dass** die Aufstelleinheit (12a-c) zumindest eine Empfangseinheit (22a-c) aufweist, welche zu einem drahtlosen Empfang zumindest eines Teils der Heizenergie und zu einer Versorgung des Heizelements (20a-c) mit zumindest einem Teil der empfangenen Energie vorgesehen ist.

4. Garsystem nach Anspruch 3, **dadurch gekennzeichnet, dass** die Heizeinheit (14a-c) zusätzlich zu dem Heizelement (20a-c) zumindest ein Induktionsheizelement (24a-c) aufweist, welches in wenigstens einem Betriebszustand das Gargutaufnahmeelement (16a-c) mit zumindest einem Teil der empfangenen Energie induktiv beheizt.

5. Garsystem nach den Ansprüchen 3 und 4, **dadurch gekennzeichnet, dass** das Induktionsheizelement (24a-c) wenigstens teilweise Teil der Empfangseinheit (22a-c) ist.

6. Garsystem nach Anspruch 4 oder 5, **dadurch gekennzeichnet, dass** das Induktionsheizelement (24a-c) und das Heizelement (20a-c) elektrisch in Reihe geschaltet sind.

7. Garsystem nach einem der Ansprüche 4 bis 6, **dadurch gekennzeichnet, dass** die Aufstelleinheit (12a-c) zumindest eine Resonanzkapazität (26a-c) aufweist, welche mit dem Induktionsheizelement (24a-c) elektrisch leitend verbunden ist.

8. Garsystem nach einem der Ansprüche 4 bis 7, **dadurch gekennzeichnet, dass** das Induktionsheizelement (24a-b) bei einer senkrechten Betrachtung auf eine Haupterstreckungsebene des Induktionsheizelements (24a-b) zumindest einen Teil (52a-b) des Heizelements (20a-b) umgibt.

9. Garsystem nach einem der Ansprüche 4 bis 8, **dadurch gekennzeichnet, dass** das Heizelement (20a-c) bei einer senkrechten Betrachtung auf eine Haupterstreckungsebene des Induktionsheizelements (24a-c) zumindest einen Teil (56a-c) des Induktionsheizelements (24a-c) umgibt.

10. Garsystem nach einem der Ansprüche 4 bis 9, **dadurch gekennzeichnet, dass** die Induktionseinheit (18a-c) bei einer senkrechten Betrachtung auf eine Haupterstreckungsebene der Induktionseinheit (18a-c) in wenigstens einem Betriebszustand innerhalb einer von dem Induktionsheizelement (24a-c) aufgespannten Fläche angeordnet ist.

11. Garsystem nach einem der vorhergehenden Ansprüche, **dadurch gekennzeichnet, dass** das Gargutaufnahmeelement (16a-c) und die Induktionseinheit (18a-c) in wenigstens einem Betriebszustand einen Abstand (28a-c) von mindestens 10 mm aufweisen.

## Claims

1. Cooking system comprising at least one placement unit (12a-c), which has at least one food-holding element (16a-c) and at least one heating unit (14a-c), which is provided for heating the food-holding element (16a-c) and which is provided in at least one operating state for supplying energy to the food-holding element (16a-c) for the purpose of heating the food-holding element (16a-c), and comprising at least one induction unit (18a-c) which has at least one induction heating element (44a-c) and which, in at least one operating state, provides at least one amount of heating energy at least for inductively heating the food-holding element (16a-c), wherein the heating unit (14a-c) has at least one heating element (20a-c) different from an induction heating element, wherein the heating element (20a-c) is provided for heating the food-holding element (16a-c), and wherein the food-holding element (16a-c) to a large extent consists of a ferromagnetic material, **characterised in that** the placement unit (12b) has at least one pad device (32b) which is provided for placing the food-holding element (16b) and in which the heating unit (14b) is at least partially integrated.

2. Cooking system at least according to the precharacterising clause of claim 1 and in particular according to claim 1, wherein the placement unit (12a) has at least one housing unit (30a) in which the heating unit (14a) is at least partially integrated, and wherein at least the heating element (20a) is integrated in the housing unit (30a), **characterised in that** the housing unit (30a) and the food-holding element (16a) are configured in one piece.

3. Cooking system according to claim 1 or 2, **characterised in that** the placement unit (12a-c) has at least one receiving unit (22a-c) which is provided for wirelessly receiving at least one part of the heating energy and for supplying the heating element (20a-c) with at least one part of the received energy.

4. Cooking system according to claim 3, **characterised in that** the heating unit (14a-c) in addition to the heating element (20a-c) has at least one induction heating element (24a-c) which, in at least one operating state, inductively heats the food-holding element (16a-c) with at least one part of the received energy.

5. Cooking system according to claims 3 and 4, **characterised in that** the induction heating element (24a-c) is at least partially part of the receiving unit (22a-c).

6. Cooking system according to claim 4 or 5, **characterised in that** the induction heating element (24a-c) and the heating element (20a-c) are electrically connected in series.

7. Cooking system according to one of claims 4 to 6, **characterised in that** the placement unit (12a-c) has at least one resonance capacitance (26a-c) which is electrically conductively connected to the induction heating element (24a-c).

8. Cooking system according to one of claims 4 to 7, **characterised in that,** when viewed perpendicular to a main extension plane of the induction heating element (24a-b), the induction heating element (24a-b) surrounds at least one part (52a-b) of the heating element (20a-b).

9. Cooking system according to one of claims 4 to 8, **characterised in that,** when viewed perpendicular to a main extension plane of the induction heating element (24a-c), the heating element (20a-c) surrounds at least one part (56a-c) of the induction heating element (24a-c).

10. Cooking system according to one of claims 4 to 9, **characterised in that,** when viewed perpendicular to a main extension plane of the induction unit (18a-c), the induction unit (18a-c) is arranged in at least one operating state within a surface spanned by the induction heating element (24a-c).

11. Cooking system according to one of the preceding claims, **characterised in that** in at least one operating state the food-holding element (16a-c) and the induction unit (18a-c) have a spacing (28a-c) of at least 10 mm.

## Revendications

1. Système de cuisson comprenant au moins une unité de placement (12a-c), qui comprend au moins un élément de réception de produits à cuire (16a-c) et au moins une unité de chauffage (14a-c), qui est conçue pour chauffer l'élément de réception de produits à cuire (16a-c) et qui est conçue pour, dans au moins un état de fonctionnement, amener de l'énergie à l'élément de réception de produits à cuire (16a-c) afin de chauffer l'élément de réception de produits à cuire (16a-c), et comprenant au moins une unité d'induction (18a-c), qui comprend au moins un élément de chauffage par induction (44a-c) et qui fournit dans au moins un état de fonctionnement au moins une énergie de chauffage servant au moins à chauffer par induction l'élément de réception de produits à cuire (16a-c),
dans lequel l'unité de chauffage (14a-c) comprend au moins un élément chauffant (20a-c) conçu de façon différente d'un élément de chauffage par induction,
dans lequel l'élément chauffant (20a-c) est conçu pour chauffer l'élément de réception de produits à cuire (16a-c), et
dans lequel l'élément de réception de produits à cuire (16a-c) est constitué en grande partie d'un matériau ferromagnétique,
**caractérisé en ce que** l'unité de placement (12b) comprend au moins un dispositif d'appui (32b), qui est conçu pour y poser l'élément de réception de produits à cuire (16b) et dans lequel l'unité de chauffage (14b) est au moins en partie intégrée.

2. Système de cuisson selon le préambule de la revendication 1 et plus particulièrement selon la revendication 1, dans lequel l'unité de placement (12a) comprend au moins un ensemble de logement (30a), dans lequel l'unité de chauffage (14a) est intégrée au moins en partie, et
dans lequel au moins l'élément chauffant (20a) est intégré dans l'ensemble de logement (30a),
**caractérisé en ce que** l'ensemble de logement (30a) et l'élément de réception de produits à cuire (16a) sont formés d'un seul tenant.

3. Système de cuisson selon la revendication 1 ou 2, **caractérisé en ce que** l'unité de placement (12a-c) comprend au moins une unité de réception (22a-c), qui est conçue pour une réception sans fil d'au moins une partie de l'énergie de chauffage et pour alimenter l'élément chauffant (20a-c) avec au moins une partie de l'énergie reçue.

4. Système de cuisson selon la revendication 3, **caractérisé en ce que** l'unité de chauffage (14a-c) comprend, outre l'élément chauffant (20a-c), au moins un élément de chauffage par induction (24a-c), qui chauffe par induction, dans au moins un état de fonctionnement, l'élément de réception de produits à cuire (16a-c) avec au moins une partie de l'énergie reçue.

5. Système de cuisson selon les revendications 3 et 4, **caractérisé en ce que** l'élément de chauffage par induction (24a-c) fait partie, au moins partiellement, de l'unité de réception (22a-c).

6. Système de cuisson selon la revendication 4 ou 5, **caractérisé en ce que** l'élément de chauffage par induction (24a-c) et l'élément chauffant (20a-c) sont connectés électriquement en série.

7. Système de cuisson selon l'une des revendications 4 à 6, **caractérisé en ce que** l'unité de placement (12a-c) comprend au moins un condensateur résonnant (26a-c), qui est relié de manière électro-conductrice à l'élément de chauffage par induction (24a-c).

8. Système de cuisson selon l'une des revendications 4 à 7, **caractérisé en ce que** l'élément de chauffage par induction (24a-b) entoure au moins une partie (52a-b) de l'élément chauffant (20a-b) dans une vue perpendiculaire au plan d'extension principale de l'élément de chauffage par induction (24a-b).

9. Système de cuisson selon l'une des revendications 4 à 8, **caractérisé en ce que** l'élément chauffant (20a-c) entoure au moins une partie (56a-c) de l'élément de chauffage par induction (24a-c) dans une vue perpendiculaire au plan d'extension principale de l'élément de chauffage par induction (24a-c).

10. Système de cuisson selon l'une des revendications 4 à 9, **caractérisé en ce que** l'unité d'induction (18a-c) est disposée, dans au moins un état de fonctionnement, à l'intérieur d'une surface délimitée par l'élément de chauffage par induction (24a-c) dans une vue perpendiculaire au plan d'extension principale de l'unité d'induction (18a-c).

11. Système de cuisson selon l'une des revendications précédentes, **caractérisé en ce que** l'élément de réception de produits à cuire (16a-c) et l'unité d'induction (18a-c) présentent un espacement (28a-c) entre eux d'au moins 10 mm au moins dans un état de fonctionnement.
